(19) Europäisches Patentamt / European Patent Office / Office européen des brevets

(11) **EP 3 166 094 B1**

(12) **EUROPEAN PATENT SPECIFICATION**

(45) Date of publication and mention
of the grant of the patent:
**26.12.2018 Bulletin 2018/52**

(21) Application number: **14896317.6**

(22) Date of filing: **02.07.2014**

(51) Int Cl.:
*G09C 1/00* (2006.01)    *H04L 9/08* (2006.01)

(86) International application number:
**PCT/JP2014/067609**

(87) International publication number:
**WO 2016/002020 (07.01.2016 Gazette 2016/01)**

(54) **MATRIX GENERATION DEVICE, MATRIX GENERATION METHOD, AND MATRIX GENERATION PROGRAM**

MATRIXERZEUGUNGSVORRICHTUNG, MATRIXERZEUGUNGSVERFAHREN UND MATRIXERZEUGUNGSPROGRAMM

DISPOSITIF DE GÉNÉRATION DE MATRICE, PROCÉDÉ DE GÉNÉRATION DE MATRICE ET PROGRAMME DE GÉNÉRATION DE MATRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.05.2017 Bulletin 2017/19**

(73) Proprietor: **Mitsubishi Electric Corporation Chiyoda-ku Tokyo 100-8310 (JP)**

(72) Inventors:
• **KAWAI, Yutaka Tokyo 100-8310 (JP)**
• **SAKAI, Yasuyuki Tokyo 100-8310 (JP)**

(74) Representative: **Pfenning, Meinig & Partner mbB Patent- und Rechtsanwälte Joachimsthaler Straße 10-12 10719 Berlin (DE)**

(56) References cited:
**JP-A- 2012 203 182**    **JP-A- 2014 095 847**
**US-A1- 2013 083 921**    **US-B1- 8 559 631**

• **VIPUL GOYAL ET AL: "Attribute-Based Encryption for Fine-Grained Access Control of Encrypted Data", INTERNATIONAL ASSOCIATION FOR CRYPTOLOGIC RESEARCH,, vol. 20061007:061901, 7 October 2006 (2006-10-07), pages 1-28, XP061001951, DOI: 10.1145/1180405.1180418 [retrieved on 2006-10-07]**
• **ZHEN LIU ET AL: "On Efficiently Transferring the Linear Secret-Sharing Scheme Matrix in Ciphertext-Policy Attribute-Based Encryption", INTERNATIONAL ASSOCIATION FOR CRYPTOLOGIC RESEARCH,, vol. 20100702:085423, 30 June 2010 (2010-06-30), pages 1-17, XP061004148, [retrieved on 2010-06-30]**

## Description

### Technical Field

The present invention relates to a matrix generation apparatus, a matrix generation method, and a matrix generation program. For example, the present invention relates to an apparatus, method, and program to generate a secret sharing matrix used for encryption and decryption.

### Background Art

With a secret sharing scheme, secret information is divided into several pieces of shared information. To restore the secret information, a specific combination of shared information need be collected. What combination of shared information should be collected can be defined by a logical formula employing a logical sum, a logical product, and the like. A secret sharing matrix is obtained by converting the logical formula into a matrix format. Elements included in the logical formula are assigned to the respective rows of the secret sharing matrix. The secret sharing matrix is designed such that the sum or product of rows of elements satisfying the logical formula has a desired value. No matter how rows of elements not satisfying the logical formula may be combined, the desired value cannot be obtained.

For example, assume that a logical formula F is a logical product of a variable P and a variable Q and that the variable P and the variable Q are respectively assigned to the 1st row and the 2nd row of a secret sharing matrix M. In this case, if both the variable P and the variable Q are true, then the logical formula F is true. That is, the combination of the variable P and the variable Q satisfies the logical formula F. Each of the variable P and the variable Q alone does not satisfy the logical formula F.

Hence, the secret sharing matrix M is designed such that each of the 1st and 2nd rows does not have the desired value but the sum or product of the 1st and 2nd rows has the desired value.

A secret sharing matrix is used in functional encryption (for example, see Patent Literature 1).

Several methods for generating a secret sharing matrix have conventionally been proposed (for example, see Non-patent Literatures 1 and 2).

### Citation List

### Patent Literature

Patent Literature 1: WO 2011/135895
Patent Literature 2: US 2013/083921 A1

### Non-Patent Literature

Non-patent Literature 1: A. Lewko, B. Waters, "Decentralizing Attribute-Based Encryption", Advances in Cryptology - EUROCRYPT 2011, Lecture Notes in Computer Science Volume 6632, 2011, pp 568-588
Non-patent Literature 2: Z. Liu, Z. Cao, "On Efficiently Transferring the Linear Secret-Sharing Scheme Matrix in Ciphertext-Policy Attribute-Based Encryption", IACR Cryptology ePrint Archive, 374, 2010
Non-patent Literature 3: G. Vipul et al.: "Attribute-Based Encrpytion for Fine-Grained Access Control of Encrypted Data"

### Summary of Invention

### Technical Problem

With the method described in Non-patent Literature 1, three values of 1, -1, and 0 need be used as components of the matrix. Also with the method described in Non-patent Literature 2, many values are used. With the conventional methods, a secret sharing matrix cannot be generated efficiently. Patent Literature 2 describes a high level method for generating a matrix from a logical formula but does not go into details on how to generate this matrix efficiently and how many values to use as components of the matrix. Non patent Literature 3 describes the idea of a general key-policy attribute-based encryption system, wherein a ciphertext is associated with a set of attributes and a user's key can be associated with any monotonic tree access structure.

It is an object of the present invention, for example, to generate a matrix efficiently from a logical formula.

**Solution to Problem**

According to one aspect of the present invention, the underlying problem is solved by a matrix generation apparatus according to claim 1, which, in particular, includes:

a tree structure generation part that receives as input a logical formula and generates tree structure data expressing the logical formula;
a root processing part that determines a type of an element expressed by a root of the tree structure data generated by the tree structure generation part, among elements of the logical formula, and generates a matrix corresponding to the determined type; and
a node processing part that stores in a memory the matrix generated by the root processing part, the node processing part sequentially selecting nodes, other than the root, of the tree structure data generated by the tree structure generation part, if having selected a node having a child node, then performing an operation corresponding to a type of an element expressed by the selected node, among the elements of the logical formula, on the matrix stored in the memory, if having selected a node not having a child node, then associating a variable being the element expressed by the selected node, among the elements of the logical formula, with one row of the matrix stored in the memory, and after having selected the nodes of the tree structure data, outputting the matrix stored in the memory and information indicating variables associated with respective rows of the matrix.

**Advantageous Effects of Invention**

In the present invention, first, a matrix corresponding to the type of the element expressed by the root of tree structure data is generated. Then, an operation corresponding to the type of the element expressed by each node of the tree structure data is performed on the matrix. With respect to a node expressing a variable, the variable is associated with one row of the matrix. Finally, a matrix where variables are mapped to the respective rows is obtained. In this manner, according to the present invention, a matrix can be generated efficiently by tracing tree structure data that expresses a logical formula.

**Brief Description of Drawings**

Fig. 1 is a diagram illustrating an example of a matrix which is generated finally in Embodiment 1.
Fig. 2 is a block diagram illustrating a configuration of a matrix generation apparatus according to Embodiment 1.
Fig. 3 is a block diagram illustrating a configuration of a tree structure generation part of the matrix generation apparatus according to Embodiment 1.
Fig. 4 is a diagram illustrating an example of a binary tree generated in Embodiment 1.
Fig. 5 is a diagram illustrating a recursive structure of the binary tree of Fig. 4.
Fig. 6 is a block diagram illustrating a configuration of a root processing part of the matrix generation apparatus according to Embodiment 1.
Fig. 7 is a block diagram illustrating a configuration of a node processing part of the matrix generation apparatus according to Embodiment 1.
Fig. 8 is a flowchart illustrating a behavior of the root processing part of the matrix generation apparatus according to Embodiment 1.
Fig. 9 is a flowchart illustrating a behavior of the node processing part of the matrix generation apparatus according to Embodiment 1.
Fig. 10 is a diagram illustrating an example of generating a matrix in Embodiment 1.
Fig. 11 is a diagram illustrating an example of a hardware configuration of the matrix generation apparatus according to the embodiment of the present invention.

**Description of Embodiments**

An embodiment of the present invention will be described hereinafter with referring to drawings.

The description of the embodiment employs the following notation.

Where the content of a variable P of a logical formula F indicates an event that a value of a certain type A is a, the variable P is expressed by the following formula:

$$A = a$$

For example, if the type A indicates "sex", the value a represents "male" or "female".

Where the content of the variable P of the logical formula F indicates an event that a value of a certain type A is not a, the variable P is expressed by the following formula:

$$A \mathrel{!=} a$$

The rows of a matrix M are counted from high to low in ascending order (namely, ordinal numbers are assigned). For example, the highest row is the 1st row. The row immediately below the 1st row is the 2nd row.

The columns of the matrix M are counted from left to right in ascending order (namely, ordinal numbers are assigned). For example, the leftmost column is the 1st column. The column immediately on the right to the 1st column is the 2nd column.

A mapping holds between a row number (that is, an ordinal number) of the matrix M and a variable of the logical formula F. That a mapping $\rho$ holds between a row number ROW and the variable P is described by the following equation:

$$\rho(\mathrm{ROW}) = P$$

That the mapping $\rho$ of $\rho(1) = p_1$ and $\rho(2) = p_1$ is defined is described as follows:

$$\rho: \{(1, p_1), (2, p_2)\}$$

Embodiment 1.

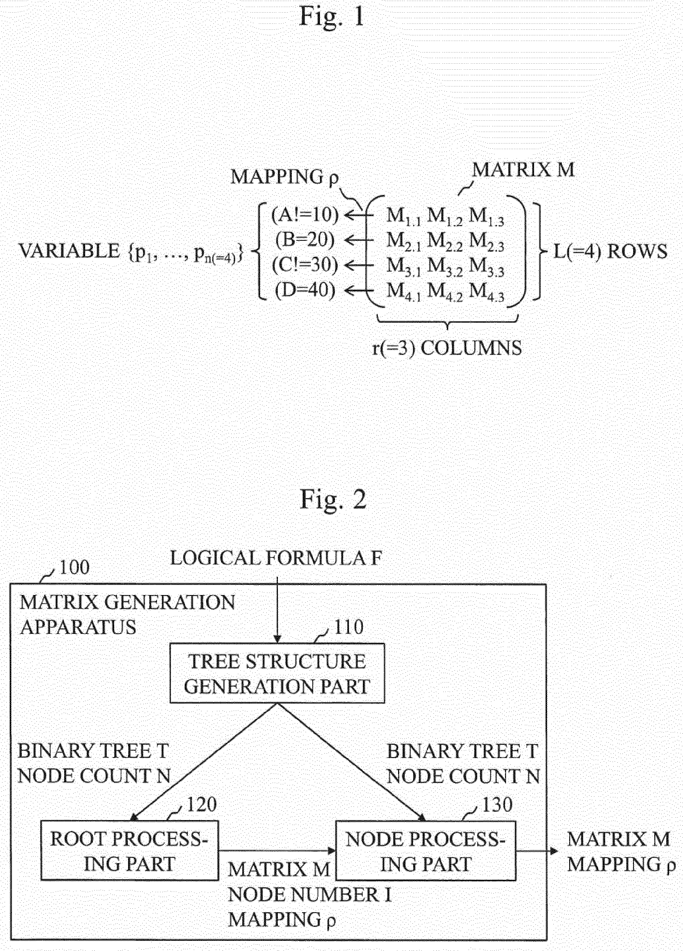

Fig. 1 is a diagram illustrating an example of a matrix M which is generated finally in this embodiment.

Referring to Fig. 1, the matrix M is a secret sharing matrix of L rows $\times$ r columns. A mapping p associates each row of the matrix M with one variable included in a set of variables $\{p_1, ..., p_n\}$. That is, every single row of the matrix M is associated with one variable by the mapping p.

In the example of Fig. 1, L = 4 and r = 3. That is, the matrix M is a 4-row, 3-column matrix. Also, n = 4. Variables $p_1$ to $p_4$ represent A != 10, B = 20, C != 30, and D = 40, respectively. That is, the set of variables is {A != 10, B = 20, C != 30, D = 40}.

The mapping p can be defined as follows:

$$\rho: \{(1, (A \mathrel{!=} 10)), (2, (B = 20)), (3, (C \mathrel{!=} 30)), (4, (D = 40))\}$$

In this embodiment, the matrix M and the mapping $\rho$ are the final output. This output is used in, for example, functional encryption.

In this embodiment, the matrix M may be a matrix other than a secret sharing matrix. A row count L, a column count r, and a variable count n can be changed as needed. The contents of the variables can also be changed as needed.

Fig. 2 is a block diagram illustrating a configuration of a matrix generation apparatus 100 according to this embodiment.

Referring to Fig. 2, the matrix generation apparatus 100 includes a tree structure generation part 110, a root processing part 120, and a node processing part 130.

The tree structure generation part 110 receives as input a logical formula F and generates a binary tree T expressing the logical formula F.

The logical formula F is generated by combining an operator such as a logical product (and), a logical sum (or), or a negation (not), with a variable. The operator and variable are elements of the logical formula F. The logical formula F is, for example, a logical formula that defines a combination of pieces of information that are shared by the secret sharing scheme.

The binary tree T is an example of tree structure data. The binary tree T has as nodes the elements of the logical formula F. A node number is assigned to each node. In this embodiment, the node number of the root is 1. The node numbers are assigned to the nodes sequentially to prioritize a left child node. For example, if the root has a child node on the left, this child node has node number 2. If the node with node number 2 has a child node (that is, a grandchild node of the root) on the left, this child node has node number 3. If the node with node number 2 has no child node and the root has a child node on the right, this child node has node number 3. How to assign the node numbers can be changed as needed.

The tree structure generation part 110 outputs the generated binary tree T and a node count N of the binary tree T to the root processing part 120 and the node processing part 130.

The root processing part 120 receives as input the binary tree T generated by the tree structure generation part 110 and the node count N of the binary tree T and determines the type of the element expressed by the root of the binary tree T, among the elements of the logical formula F. The root processing part 120 generates a matrix M corresponding to the determined type.

For example, if the type of the element expressed by the root is a logical product operator, the root processing part 120 executes a logical product process. In the logical product process, a matrix M corresponding to the logical product operator is generated. Also, a node number I that is next to the node number of the root is calculated.

If the type of the element expressed by the root is a logical sum operator, the root processing part 120 executes a logical sum process. In the logical sum process, a matrix M corresponding to the logical sum operator is generated. Also, a node number I that is next to the node number of the root is calculated.

If the type of the element expressed by the root is a variable (that is, if the node count N is 1), the root processing part 120 executes a variable process. In the variable process, a matrix M corresponding to the variable is generated. Also, a node number I that is next to the node number of the root is calculated. Furthermore, the variable is associated with one row of the matrix M by a mapping ρ.

The root processing part 120 outputs the generated matrix M to the node processing part 130. The root processing part 120 also outputs the calculated node number I to the node processing part 130. If the mapping ρ is generated, the root processing part 120 outputs the mapping ρ as well to the node processing part 130.

The node processing part 130 receives as input the binary tree T generated by the tree structure generation part 110, the node count N of the binary tree T, the matrix M and the mapping ρ (if any) which are generated by the root processing part 120, and the node number I, and stores in a memory (not illustrated) the binary tree T, node count N, matrix M, node number I, and mapping ρ.

The node processing part 130 sequentially selects nodes, other than the root, of the binary tree T. Specifically, the node processing part 130 selects a node corresponding to the node number I. The node number I is incremented by one until the node number I exceeds the node count N.

If the node processing part 130 has selected a node having a child node, then the node processing part 130 performs an operation corresponding to the type of the element expressed by the selected node, among the elements of the logical formula F, on the matrix M stored in the memory.

For example, if the type of the element expressed by the selected node is a logical product operator, the node processing part 130 executes a logical product process. In the logical product process, an operation corresponding to the logical product operator is performed on the matrix M.

If the type of the element expressed by the selected node is a logical sum operator, the node processing part 130 executes a logical sum process. In the logical sum process, an operation corresponding to the logical sum operator is performed on the matrix M.

If the node processing part 130 has selected a node (that is, a leaf) not having a child node, then the node processing part 130 associates a variable being the element expressed by the selected node, among the elements of the logical formula F, with one row of the matrix M stored in the memory.

That is, if the type of the element expressed by the selected node is a variable, the node processing part 130 executes a variable process. In the variable process, the variable is associated with one row of the matrix M by a mapping ρ.

After having selected the nodes of the binary tree T, the node processing part 130 outputs the matrix M and mapping ρ stored in the memory. The mapping ρ is information indicating variables associated with the respective rows of the matrix M.

The tree structure generation part 110 will be described in detail hereinafter.

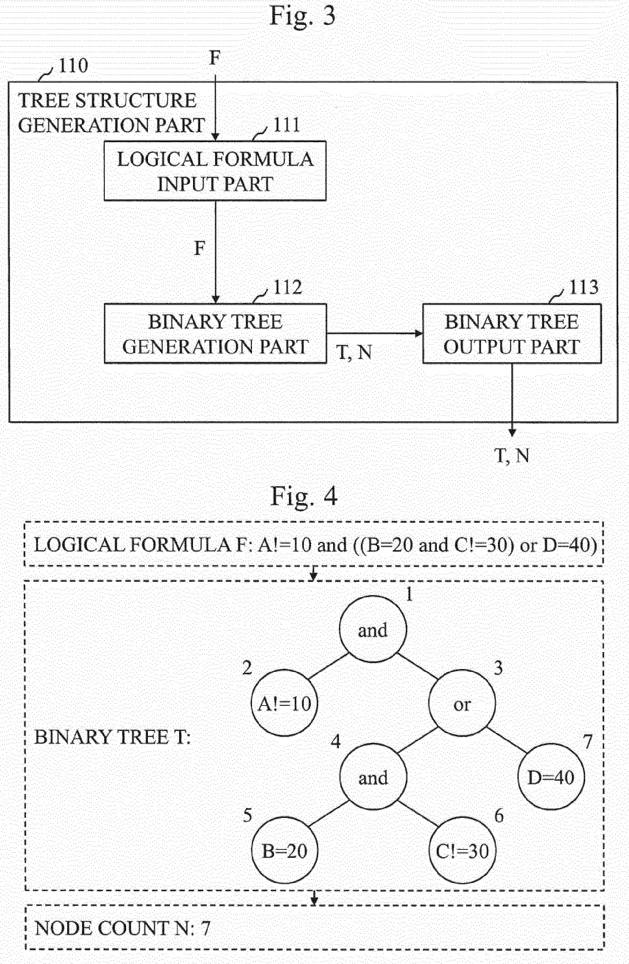

Fig. 3 is a block diagram illustrating a configuration of the tree structure generation part 110. Fig. 4 is a diagram illustrating an example of the binary tree T generated in this embodiment.

Referring to Fig. 3, the tree structure generation part 110 includes a logical formula input part 111, a binary tree generation part 112, and a binary tree output part 113.

A behavior of each part of the tree structure generation part 110 will be described hereinafter with referring to the example of Fig. 4.

The logical formula input part 111 receives as input the following logical formula F in which logical products (and), a logical sum (or), and negations (not) are combined:

$$A \mathrel{!=} 10 \text{ and } ((B = 20 \text{ and } C \mathrel{!=} 30) \text{ or } D = 40)$$

This logical formula F holds when A is not 10, B is 20, and C is not 30, or when A is not 10 and D is 40.

The binary tree generation part 112 converts the logical formula F obtained by the logical formula input part 111 into a binary tree T.

The operations in the logical formula F are performed in the priority order of a parenthesized logical formula, a logical product (and), and a logical sum (or). Hence, the operation order of the logical formula F is the parenthesized logical product (and), the parenthesized logical sum (or), and the non-parenthesized logical product (and). When converting the logical formula F into the binary tree T, the binary tree generation part 112 arranges the elements of the logical formula F in the reverse order to the operation order of the logical formula F, starting with the root. Specifically, first, the binary tree generation part 112 arranges, at the root, an operator X (in the example of Fig. 4, the non-parenthesized logical product) to be operated the last. The binary tree generation part 112 arranges, at the child node on the left of the operator X, an operator Y1 to be calculated the last in the logical formula on the left of the operator X, or a variable Y2 (in the example of Fig.4, A != 10). Likewise, the binary tree generation part 112 arranges, at the child node on the right of the operator X, an operator Z1 (in the example of Fig. 4, the parenthesized logical sum) to be operated the last in the logical formula on the right of the operator X, or a variable Z2. Then, the binary tree generation part 112 focuses on the child node on the left of the operator X. If the child node on the left of the operator X is the operator Y1, the binary tree generation part 112 arranges, at the child node on the left of the operator Y1, an operator to be operated the last in the logical formula on the left of the operator Y1, or a variable. Likewise, the binary tree generation part 112 arranges, at the child node on the right of the operator Y1, an operator to be operated the last in the logical formula on the right of the operator Y1, or a variable. After that, the binary tree generation part 112 carries out the same process with respect to the child node on the right of the operator X. On the other hand, if the child node on the left of the operator X is the variable Y2, the binary tree generation part 112 immediately carries out a process with respect to the child node on the right of the operator X. The binary tree generation part 112 alternates the process with respect to the left child node and the process with respect to the right node repeatedly until the binary tree generation part 112 completes arranging variables at all the leaves.

When the binary tree T is completed, the binary tree generation part 112 gives a node number to each node. 1 is given to the root. 2 and subsequent numbers are given to the other nodes with the priority being given to the left side. The binary tree generation part 112 records the maximum value of the node numbers as a node count N.

In the example of Fig. 4, a binary tree T having 7 nodes as follows is generated.

- node number 1 (root): logical product (and)
- node number 2 (leaf): A != 10
- node number 3: logical sum (or)
- node number 4: logical product (and)
- node number 5 (leaf): B = 20
- node number 6 (leaf): C != 30
- node number 7 (leaf): D = 40

The binary tree output part 113 outputs the binary tree T generated by the binary tree generation part 112 and the node count N recorded by the binary tree generation part 112.

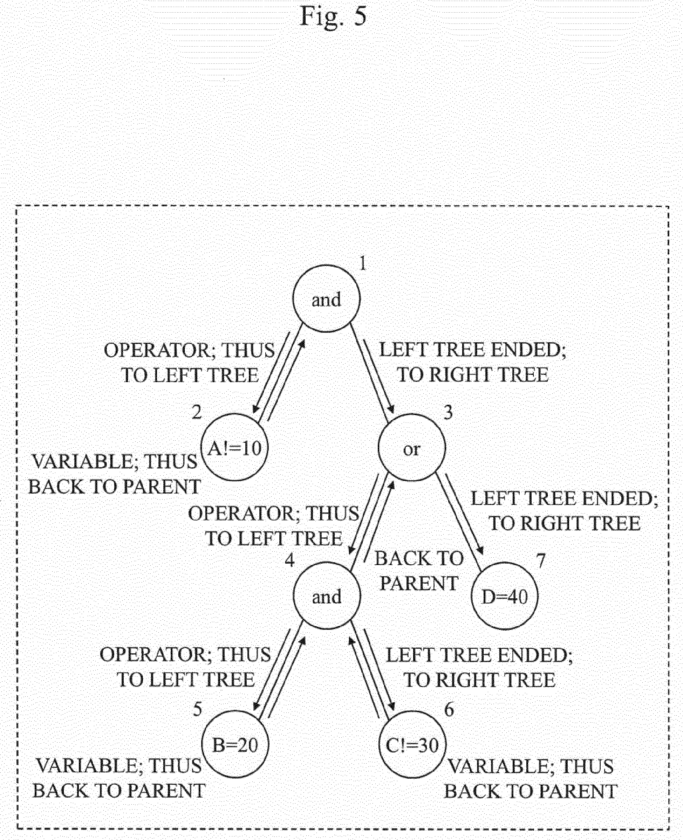

The root processing part 120 and the node processing part 130 will be described in detail hereinafter. The processes are carried out with using a recursive structure as illustrated in Fig. 5.

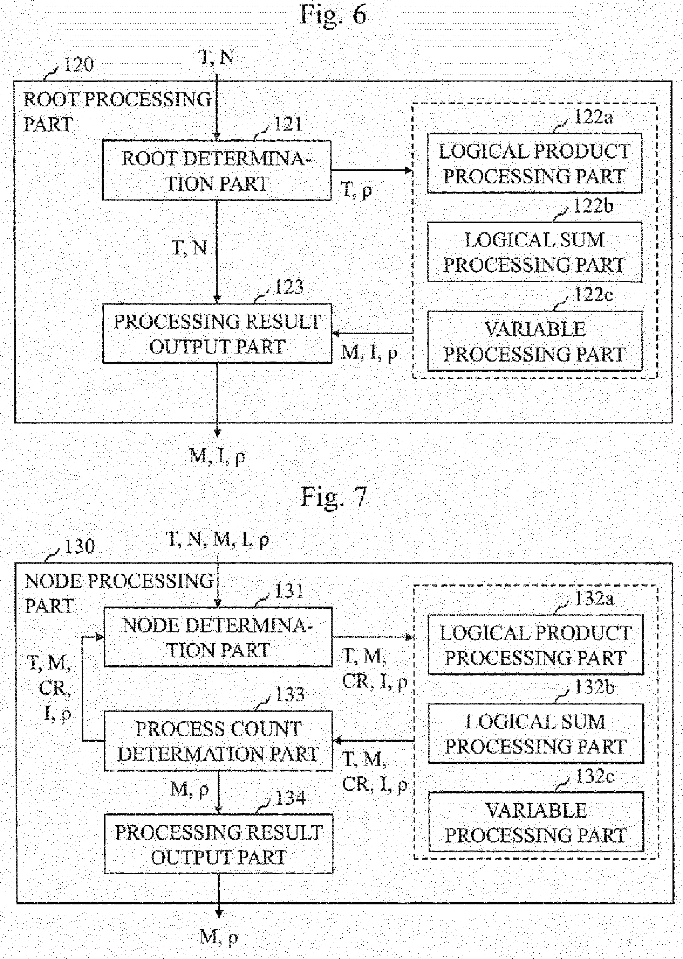

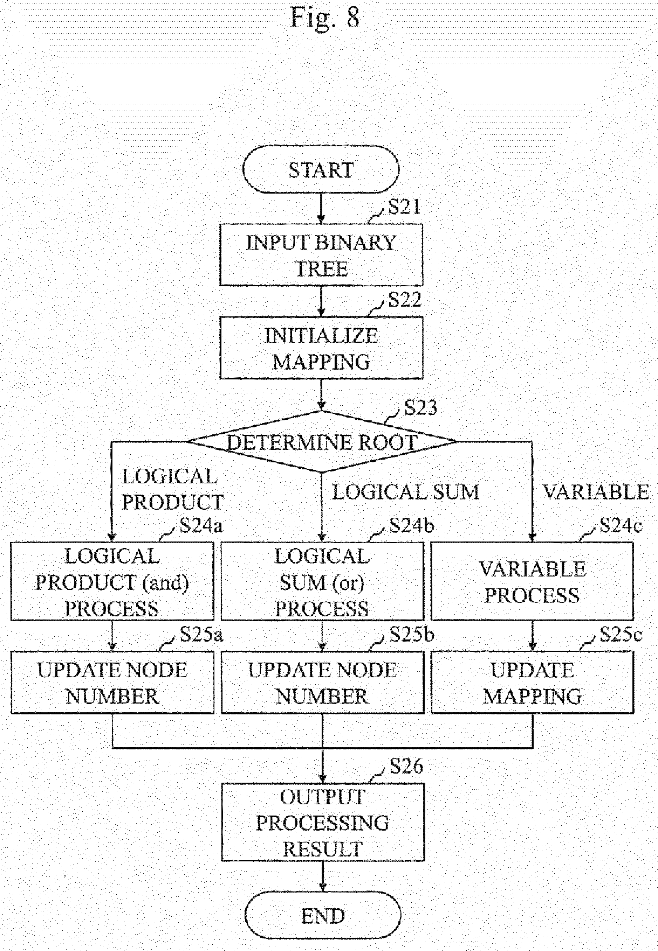

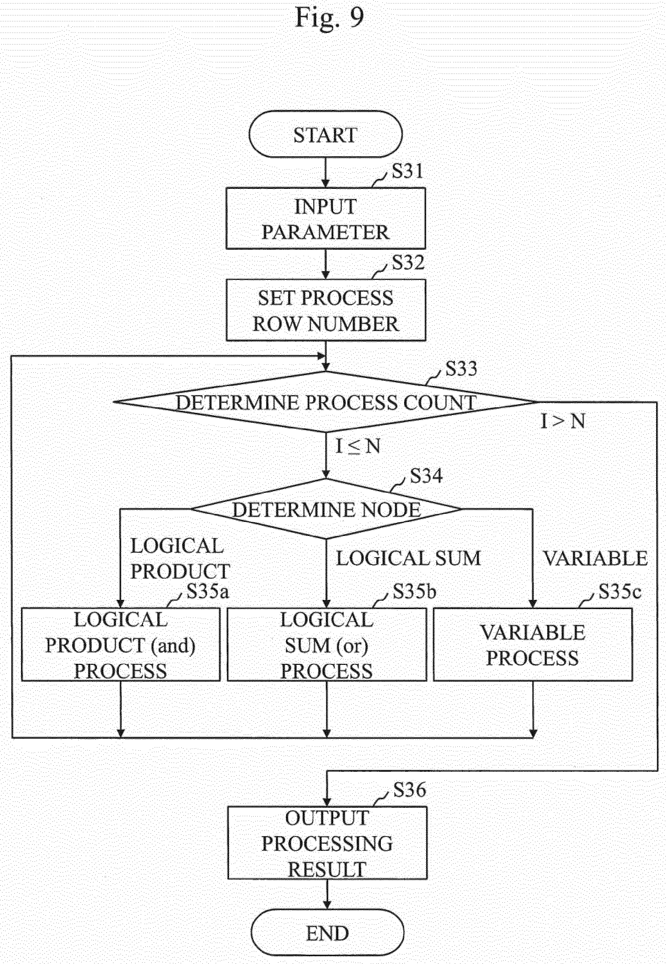

Fig. 6 is a block diagram illustrating a configuration of the root processing part 120. Fig. 7 is a block diagram illustrating a configuration of the node processing part 130. Fig. 8 is a flowchart illustrating a behavior of the root processing part 120. Fig. 9 is a flowchart illustrating a behavior of the node processing part 130.

Referring to Fig. 6, the root processing part 120 includes a root determination part 121, a logical product processing part 122a, a logical sum processing part 122b, a variable processing part 122c, and a processing result output part 123.

Referring to Fig. 7, the node processing part 130 includes a node determination part 131, a logical product processing part 132a, a logical sum processing part 132b, a variable processing part 132c, a process count determination part 133, and a processing result output part 134.

A behavior of each part of the root processing part 120 will be described hereinafter with referring to Fig. 8.

In S21, the root determination part 121 receives as input the binary tree T and the node count N.

In S22, the root determination part 121 initializes a mapping $\rho$ of from a row number to a variable.

In S23, the root determination part 121 determines the root of the binary tree T is which one of a logical product, a logical sum, and a variable. If the root is a logical product, the flow proceeds to S24a. If the root is a logical sum, the flow proceeds to S24b. If the root is a variable, the flow proceeds to S24c.

In S24a, the logical product processing part 122a receives as input the binary tree T from the root determination part 121 and generates the following matrix M. The flow proceeds to S25a.

[Formula 1]

$$\begin{pmatrix} 1 & 0 \\ 0 & 1 \end{pmatrix}$$

In S25a, the logical product processing part 122a adds 1 to the node number of the root of the binary tree T, thus obtaining a node number I. The flow proceeds to S26.

In S24b, the logical sum processing part 122b receives as input the binary tree T from the root determination part 121 and generates the following matrix M. The flow proceeds to S25b.

[Formula 2]

$$\begin{pmatrix} 1 \\ 1 \end{pmatrix}$$

In S25b, the logical sum processing part 122b adds 1 to the node number of the root of the binary tree T, thus obtaining a node number I. The flow proceeds to S26.

In S24c, the variable processing part 122c receives as input the binary tree T and the mapping p from the root determination part 121 and generates the following matrix M. The flow proceeds to S25c.

(1)

In S25c, the variable processing part 122c adds 1 to the node number of the root of the binary tree T, thus obtaining a node number I. The variable processing part 122c defines the following mapping p:

$$\rho(1) = p_1$$

That is, the variable processing part 122c updates the mapping $\rho$ as follows. The flow proceeds to S26.

$$\rho: \{(1, p_1)\}$$

In S26, the processing result output part 123 outputs the matrix M generated by one of the logical product processing part 122a, logical sum processing part 122b, and variable processing part 122c. The processing result output part 123 also outputs the node number I calculated by one of the logical product processing part 122a, logical sum processing part 122b, and variable processing part 122c. The processing result output part 123 further outputs the mapping $\rho$ in the initial state, or the mapping $\rho$ updated by the variable processing part 122c.

A behavior of each part of the node processing part 130 will be described hereinafter with referring to Fig. 9.

In S31, the node determination part 131 receives as input the binary tree T, the node count N, the matrix M, and the mapping $\rho$.

In S32, the node determination part 131 sets a process row number CR to 1. The CRth row of the matrix M is the row with which a variable will be associated next.

In S33, the process count determination part 133 determines whether or not the node number I is larger than the node count N. If the node number I is smaller than the node count N or equal to the node count N (that is, $I \leq N$), the flow proceeds to S34. If the node number I is larger than the node count N (that is, $I > N$), the binary tree T has no more node to be selected, and accordingly the flow proceeds to S36.

In S34, the node determination part 131 selects a node corresponding to the node number I. The node determination part 131 determines which one of a logical product, a logical sum, and a variable, the selected node is. If the node (in this case, a node having a child node) is a logical product, the flow proceeds to S35a. If the node (in this case, a node having a child node) is a logical sum, the flow proceeds to S35b. If the node (in this case, a leaf) is a variable, the flow proceeds to S35c.

In S35a, the logical product processing part 132a receives as input the binary tree T, matrix M, process row number CR, node number I, and mapping $\rho$ from the node determination part 131 and executes a logical product process. In the logical product process, the matrix M and node number I are updated. The logical product process will be described later in detail. The flow returns to S33.

In S35b, the logical sum processing part 132b receives as input the binary tree T, matrix M, process row number CR, node number I, and mapping $\rho$ from the node determination part 131 and executes a logical sum process. In the logical sum process, the matrix M and node number I are updated. The logical sum process will be described later in detail. The flow returns to S33.

In S35c, the variable processing part 132c receives as input the binary tree T, matrix M, process row number CR, node number I, and mapping $\rho$ from the node determination part 131 and executes a variable process. In the variable process, the matrix M, process row number CR, and node number I are updated. The variable process will be described later in detail. The flow returns to S33.

When the flow returns to S33 and proceeds to S34 again, the process count determination part, 133 transfers to the node determination part 131, the matrix M and node number I updated by one of the logical product processing part 132a, logical sum processing part 132b, and variable processing part 132c. If the process row number CR and mapping $\rho$ are updated by the variable processing part 132c, the process count determination part 133 transfers the updated process row number CR and mapping p as well to the node determination part 131.

In S36, the processing result output part 134 receives as input the matrix M and mapping $\rho$ from the process count determination part 133 and outputs the matrix M and mapping $\rho$.

The logical product process executed in S35a will be described hereinafter in detail.

The logical product processing part 132a receives as input the binary tree T, the matrix M of L' $\times$ r', the process row number CR, the node number I, and the mapping p.

In the matrix M of L' $\times$ r', the logical product processing part 132a adds a row in which every component is 0, as the (L' + 1)th row. Since a row is added, the matrix M becomes a matrix of (L' + 1) $\times$ r'.

In the matrix M of (L' + 1) $\times$ r', the logical product processing part 132a adds a column in which every component is 0, as the (r' + 1)th column. Since a column is added, the matrix M becomes a matrix of (L' + 1) $\times$ (r' + 1).

In the matrix M of (L' + 1) $\times$ (r' + 1), the logical product processing part 132a defines a column in which 1 is located the leftmost in the CRth row, as the CLth column.

In the matrix M of (L' + 1) $\times$ (r' + 1), the logical product processing part 132a overwrites the (i + 1)th column with the ith column, where i is a value of r' to CL. That is, the logical product processing part 132a copies the r'th column over the (r' + 1)th column, copies the (r' - 1)th column over the r'th column, ..., and finally copies the CLth column over the (CL + 1)th column.

In the matrix M of (L' + 1) $\times$ (r' + 1), the logical product processing part 132a overwrites the (j + 1)th row with the jth row, where j is a value of L' to CR. That is, the logical product processing part 132a copies the L'th row over the (L' + 1)th row, copies the (L' - 1)th row over the L'th row, ..., and finally copies the CRth row over the (CR + 1)th row.

In the matrix M of (L' + 1) $\times$ (r' + 1), the logical product processing part 132a rewrites the CRth-row, CLth-column component to 1, the CRth-row, (CL + 1)th-column component to 0, the (CR + 1)th-row, CLth-column component to 0, and the (CR + 1)th-row, (CL + 1)th-column component to 1.

The logical product processing part 132a adds 1 to the node number I.

The logical product processing part 132a outputs the binary tree T, the matrix M of (L' + 1) × (r' + 1), the process row number CR, the node number I, and the mapping ρ.

The logical sum process executed in S35b will be described hereinafter in detail.

The logical sum processing part 132b receives as input the binary tree T, the matrix M of L' × r', the process row number CR, the node number I, and the mapping ρ.

In the matrix M of L' × r', the logical sum processing part 132b adds a row in which every component is 0, as the (L' + 1)th row. Since a row is added, the matrix M becomes a matrix of (L' + 1) × r'.

In the matrix M of (L' + 1) × r', the logical sum processing part 132b overwrites the (j + 1)th row with the jth row, where j is a value of L' to CR. That is, the logical sum processing part 132b copies the L'th row over the (L' + 1)th row, copies the (L' - 1)th row over the L'th row, ..., and finally copies the CRth row over the (CR + 1)th row.

The logical sum processing part 132b adds 1 to the node number I.

The logical sum processing part 132b outputs the binary tree T, the matrix M of (L' + 1) × r', the process row number CR, the node number I, and the mapping ρ.

The variable process executed in S35c will be described hereinafter in detail.

The variable processing part 132c receives as input the binary tree T, the matrix M of L' × r', the process row number CR, the node number I, and the mapping ρ.

The variable processing part 132c defines the following mapping ρ between the process row number CR and the variable $p_k$ of the leaf of the node number I:

$$\rho(CR) = p_k$$

That is, the variable processing part 132c adds (CR, $p_k$) to the mapping ρ.

The variable processing part 132c adds 1 to the node number I.

The variable processing part 132c adds 1 to the process row number CR.

The variable processing part 132c outputs the binary tree T, the matrix M of of L' × r', the process row number CR, the node number I, and the mapping ρ.

In this embodiment, with respect to a combination of rows for which the addition results of adding the same-column components is 1 in every column, among the rows of the matrix M outputted from the node processing part 130, if variables associated with the respective rows are true, then the logical formula F is true. Conversely, with respect to a combination of rows for which the addition result of adding the same-column components is not 1 in at least one column, among the rows of the matrix M outputted from the node processing part 130, even if variables associated with the respective rows are true, the logical formula F is false. In this embodiment, the root process and node process described above are carried out in order to generate a matrix M having such a nature.

For example, if the type of the element expressed by the root of the binary tree T, among the elements of the logical formula F, is a logical product operator, the root processing part 120 performs the process of S24a. That is, the root processing part 120 generates a 2-row, 2-column matrix in which the 1st-row, 1st-column component and the 2nd-row, 2nd-column component are each 1, and the 1st-row, 2nd-column component and the 2nd-row, 1st-column component are each 0, as a matrix M corresponding to the logical product operator.

For example, if the type of the element expressed by the root of the binary tree T, among the elements of the logical formula F, is a logical sum operator, the root processing part 120 performs the process of S24b. That is, the root processing part 120 generates a 2-row, 1-column matrix in which every component is 1, as a matrix M corresponding to the logical sum operator.

For example, if the type of the element expressed by a node having a child node, among the elements of the logical formula F, is a logical product operator, the node processing part 130 performs the process of S35a. That is, the node processing part 130 performs an operation of adding a new row and a new column, and setting the CRth-row, CLth-column component and the (CR + 1)th-row, (CL + 1)th-column component each to 1, and the CRth-row, (CL + 1)th-column component and the (CR + 1)th-row, CLth-column component each to 0, on the matrix M, as an operation corresponding to the logical product operator, where the CRth row is a row with which a variable is to be associated next, and the CLth column is a column having the smallest ordinal number among columns whose CRth-row components are each 1.

In the process of S35a, substantially, the CRth row is extended to two rows, and the (CR + 1)th and subsequent rows are shifted downward by one. Also, the CLth column is extended to 2 columns, and the (CL + 1)th and subsequent columns are shifted to the right by one. Thus, while converting the CRth-row, CLth-column component of before the extension into a 2-row, 2-column submatrix which is the same as the matrix generated by the process of S24a, it is possible to prevent the extension (that is, the operation corresponding to the logical product operator) from affecting the other components. Hence, the logical product operator expressed by the selected node can be appropriately reflected in the matrix M.

For example, if the type of the element expressed by a node having a child node, among the elements of the logical formula F, is a logical sum operator, the node processing part 130 performs the process of S35b. That is, the node processing part 130 performs an operation of adding a new row and setting each component in the (CR + 1)th row to the same value as a corresponding component in the CRth row, on the matrix M, as an operation corresponding to the logical sum operator, where the CRth row is the row with which a variable is to be associated next.

In the process of S35b, substantially, the CRth row is extended to two rows, and the (CR + 1)th and subsequent rows are shifted downward by one. Thus, while converting the CRth-row components of before the extension whose values are each 1 into a 2-row, 1-column submatrix which is the same as the matrix generated by the process of S24b, it is possible to prevent the extension (that is, the operation corresponding to the logical sum operator) from affecting the other components. Hence, the logical sum operator expressed by the selected node can be appropriately reflected in the matrix M.

In this manner, according to this embodiment, the matrix M can be generated efficiently by tracing the binary tree T that expresses the logical formula F.

In this embodiment, the node processing part 130 executes the process for each node of the binary tree T by recursive call. Hence, the matrix M can be generated more efficiently.

As has been described above, a matrix generation method according to this embodiment includes: a step of receiving as input the logical formula F; a step of generating a tree structure equivalent to the logical formula F; a step of performing a process for the root of the tree structure; a step of determining whether or not each node of the tree structure has a child node; a step of, if a node has a child node, performing a process for the child node by recursive call; and a step of, if a node does not have a child node, associating a variable with a row and returning to the parent node.

In this matrix generation method, the components of the generated matrix M are each 0 or 1. By linearly combining the row vectors of a submatrix constituted of rows with which the logical formula F holds, a vector in which every component is 1 can be generated. When the row vectors of a submatrix constituted of rows with which the logical formula F does not hold are linearly combined, the vector in which every component is 1 cannot be generated.

In this matrix generation method, if a node is a logical product (and), a submatrix expressing the logical product (and) is generated in the matrix M. If a node is a logical sum (or), a row that is the same as the row being processed is added in the matrix M.

When this matrix generation method is used, the size of the matrix M can be reduced. Also, the conversion process of from the logical formula F into the matrix M can be performed efficiently. Furthermore, the program size in implementation can be reduced.

Various modifications can be made to this embodiment as needed.

For example, in this embodiment, the following matrix (or submatrix) is generated by the logical product processes of S24a and S35a.

[Formula 3]

$$\begin{pmatrix} 1 & 0 \\ 0 & 1 \end{pmatrix}$$

Nevertheless, the following matrix (or submatrix) may be generated by the logical product processes of S24a and S35a.

[Formula 4]

$$\begin{pmatrix} 0 & 1 \\ 1 & 0 \end{pmatrix}$$

In this embodiment, the matrix M is constituted of 0(s) and 1(s). Alternatively, the matrix M may be constituted of integers other than 0(s) and 1(s), or real numbers.

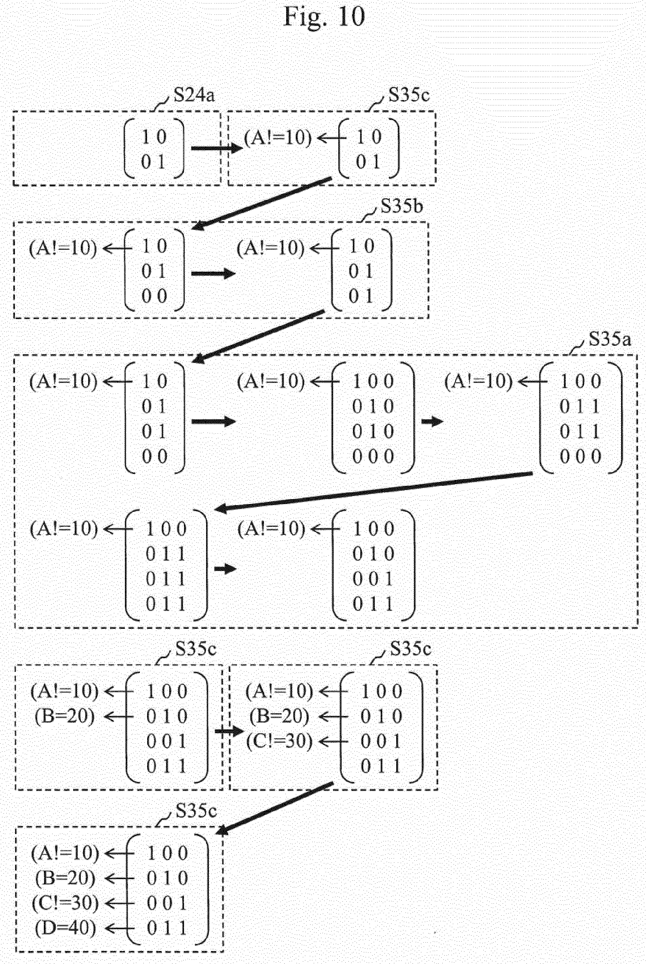

Fig. 10 is a diagram illustrating an example of generating a matrix M in this embodiment.

In the example of Fig. 10, the example of Fig. 4 is applied.

The behavior of each part of the root processing part 120 in the example of Fig. 10 will be described hereinafter with referring to Fig. 8.

In S21, the root determination part 121 receives as input a binary tree T which expresses the following logical formula F, and a node count N.

$$A \neq 10 \text{ and } ((B = 20 \text{ and } C \neq 30) \text{ or } D = 40)$$

The node count N of having nodes is 7. The binary tree T has 7 nodes as follows:

- node number 1 (root): logical product (and)
- node number 2 (leaf): A != 10
- node number 3: logical sum (or)
- node number 4: logical product (and)
- node number 5 (leaf): B = 20
- node number 6 (leaf): C != 30
- node number 7 (leaf): D = 40

In S22, the root determination part 121 initializes a mapping p.

In S23, the root determination part 121 determines that the root of the binary tree T is a logical product. The flow proceeds to S24a.

In S24a, the logical product processing part 122a generates the following matrix M. The flow proceeds to S25a.

[Formula 5]

$$\begin{pmatrix} 1 & 0 \\ 0 & 1 \end{pmatrix}$$

In S25a, the logical product processing part 122a updates a node number I from 1 to 2. The flow proceeds to S26.

In S26, the processing result output part 123 outputs the matrix M, the node number I, and the mapping $\rho$.

The behavior of each part of the node processing part 130 in the example of Fig. 10 will be described hereinafter with referring to Fig. 9.

In S31, the node determination part 131 receives as input the binary tree T, the node count N, the matrix M, the node number I, and the mapping p. The node count N is 7. The node number I is 2.

In S32, the node determination part 131 sets the process row number CR to 1.

In S33, the process count determination part 133 determines that the node number I is smaller than the node count N (that is, I ≤ N since I = 2 and N = 7). The flow proceeds to S34.

In S34, the node determination part 131 selects a node corresponding to the node number I. The node determination part 131 determines that the selected node is a variable (A != 10). The flow proceeds to S35c.

In S35c, the variable processing part 132c receives as input the binary tree T, the matrix M of 2 × 2, the process row number CR, the node number I, and the mapping ρ. The process row number CR is 1. The node number I is 2.

The variable processing part 132c defines the following mapping ρ between the process row number CR and the variable (A != 10) of the leaf of the node number I:

$$\rho(1) = (A \: != 10)$$

That is, the variable processing part 132c adds (1, (A != 10)) to the mapping p.

The variable processing part 132c updates the node number I from 2 to 3.

The variable processing part 132c updates the process row number CR from 1 to 2.

The variable processing part 132c outputs the binary tree T, the matrix M of 2 × 2, the process row number CR, the node number I, and the mapping ρ. The flow returns to S33.

In S33, the process count determination part 133 determines that the node number I is smaller than the node count N (that is, I ≤ N since I = 3 and N = 7). The flow proceeds to S34.

In S34, the node determination part 131 selects a node corresponding to the node number I. The node determination part 131 determines that the selected node is a logical sum. The flow proceeds to S35b.

In S35b, the logical sum processing part 132b receives as input the binary tree T, the matrix M of 2 × 2, the process row number CR, the node number I, and the mapping ρ. The process row number CR is 2. The node number I is 3. The mapping ρ is {(1, (A != 10))}.

In the matrix M of 2 × 2, the logical sum processing part 132b adds a row in which every component is 0, as the 3rd row. Since a row is added, the matrix M becomes the following matrix of 3 × 2:

[Formula 6]

$$\begin{pmatrix} 1 & 0 \\ 0 & 1 \\ 0 & 0 \end{pmatrix}$$

In the matrix M of 3 × 2, the logical sum processing part 132b copies the 2nd row over the 3rd row. As a result, the matrix M becomes the following matrix:

[Formula 7]

$$\begin{pmatrix} 1 & 0 \\ 0 & 1 \\ 0 & 1 \end{pmatrix}$$

The logical sum processing part 132b updates the node number I from 3 to 4.

The logical sum processing part 132b outputs the binary tree T, the matrix M of $3 \times 2$, the process row number CR, the node number I, and the mapping $\rho$. The flow returns to S33.

In S33, the process count determination part 133 determines that the node number I is smaller than the node count N (that is, $I \leq N$ since $I = 4$ and $N = 7$). The flow proceeds to S34.

In S36, the processing result output part 134 receives as input the matrix M and the mapping $\rho$ from the process count determination part 133 and outputs the matrix M and the mapping $\rho$.

In S34, the node determination part 131 selects a node corresponding to the node number I. The node determination part 131 determines that the selected node is a logical product. The flow proceeds to S35a.

In S35a, the logical product processing part 132a receives as input the binary tree T, the matrix M of $3 \times 2$, the process row number CR, the node number I, and the mapping $\rho$. The process row number CR is 2. The node number I is 4. The mapping $\rho$ is {(1, (A != 10))}.

In the matrix M of $3 \times 2$, the logical product processing part 132a adds a row in which every component is 0, as the 4th row. Since a row is added, the matrix M becomes the following matrix of $4 \times 2$:

[Formula 8]

$$\begin{pmatrix} 1 & 0 \\ 0 & 1 \\ 0 & 1 \\ 0 & 0 \end{pmatrix}$$

In the matrix M of $4 \times 2$, the logical product processing part 132a adds a column in which every component is 0, as the 3rd column. Since a column is added, the matrix M becomes the following matrix of $4 \times 3$:

[Formula 9]

$$\begin{pmatrix} 1 & 0 & 0 \\ 0 & 1 & 0 \\ 0 & 1 & 0 \\ 0 & 0 & 0 \end{pmatrix}$$

In the matrix M of 4 × 3, the logical product processing part 132a defines a column in which 1 is located the leftmost in the CRth row, as the CLth column. That is, the logical product processing part 132a sets CL to 2.

In the matrix M of 4 × 3, the logical product processing part 132a copies the 2nd column over the 3rd column. As a result, the matrix M becomes the following matrix:

[Formula 10]

$$\begin{pmatrix} 1 & 0 & 0 \\ 0 & 1 & 1 \\ 0 & 1 & 1 \\ 0 & 0 & 0 \end{pmatrix}$$

In the matrix M of 4 × 3, the logical product processing part 132a copies the 3rd row over the 4th row and the 2nd row over the 3rd row. As a result, the matrix M becomes the following matrix:

[Formula 11]

$$\begin{pmatrix} 1 & 0 & 0 \\ 0 & 1 & 1 \\ 0 & 1 & 1 \\ 0 & 1 & 1 \end{pmatrix}$$

In the matrix M of 4 × 3, the logical product processing part 132a rewrites the CRth-row, CLth-column component to 1, the CRth-row, (CL + 1)th-column component to 0, the (CR + 1)th-row, CLth-column component to 0, and the (CR + 1)th-row, (CL + 1)th-column component to 1. That is, the logical product processing part 132a sets the 2nd-row, 2nd-column component and the 3rd-row, 3rd-column component each to 1, and the 2nd-row, 3rd-column component and the 3rd-row, 2nd-column component each to 0. As a result, the matrix M becomes the following matrix:

[Formula 12]

$$\begin{pmatrix} 1 & 0 & 0 \\ 0 & 1 & 0 \\ 0 & 0 & 1 \\ 0 & 1 & 1 \end{pmatrix}$$

The logical product processing part 132a updates the node number I from 4 to 5.
The logical product processing part 132a outputs the binary tree T, the matrix M of 4 × 3, the process row number CR, the node number I, and the mapping ρ. The flow returns to S33.
In S33, the process count determination part 133 determines that the node number I is smaller than the node count N (that is, I ≤ N since I = 5 and N = 7). The flow proceeds to S34.
In S34, the node determination part 131 selects a node corresponding to the node number I. The node determination part 131 determines that the selected node is a variable (B = 20). The flow proceeds to S35c.
In S35c, the variable processing part 132c receives as input the binary tree T, the matrix M of 4 × 3, the process row number CR, the node number I, and the mapping p. The process row number CR is 2. The node number I is 5. The mapping $\rho$ is {(1, (A != 10))}.

The variable processing part 132c defines the following mapping p between the process row number CR and the variable (B = 20) of the leaf of the node number I:

$$\rho(2) = (B = 20)$$

That is, the variable processing part 132c adds (2, (B = 20)) to the mapping p.

The variable processing part 132c updates the node number I from 5 to 6.

The variable processing part 132c updates the process row number CR from 2 to 3.

The variable processing part 132c outputs the binary tree T, the matrix M of 4 × 3, the process row number CR, the node number I, and the mapping $\rho$. The flow returns to S33.

In S33, the process count determination part 133 determines that the node number I is smaller than the node count N (that is, $I \le N$ since I = 6 and N = 7). The flow proceeds to S34.

In S34, the node determination part 131 selects a node corresponding to the node number I. The node determination part 131 determines that the selected node is a variable (C != 30). The flow proceeds to S35c.

In S35c, the variable processing part 132c receives as input the binary tree T, the matrix M of 4 × 3, the process row number CR, the node number I, and the mapping $\rho$. The process row number CR is 3. The node number I is 6. The mapping $\rho$ is {(1, (A != 10)), (1, (B = 20))}.

The variable processing part 132c defines the following mapping p between the process row number CR and the variable (C != 30) of the leaf of the node number I:

$$\rho(3) = (C \mathbin{!=} 30)$$

That is, the variable processing part 132c adds (3, (C != 30)) to the mapping p.

The variable processing part 132c updates the node number I from 6 to 7.

The variable processing part 132c updates the process row number CR from 3 to 4.

The variable processing part 132c outputs the binary tree T, the matrix M of 4 × 3, the process row number CR, the node number I, and the mapping $\rho$. The flow returns to S33.

In S33, the process count determination part 133 determines that the node number I is the same as the node count N (that is, $I \le N$ since I = 7 and N = 7). The flow proceeds to S34.

In S34, the node determination part 131 selects a node corresponding to the node number I. The node determination part 131 determines that the selected node is a variable (D = 40). The flow proceeds to S35c.

In S35c, the variable processing part 132c receives as input the binary tree T, the matrix M of 4 × 3, the process row number CR, the node number I, and the mapping $\rho$. The process row number CR is 3. The node number I is 7. The mapping $\rho$ is {(1, (A != 10)), (1, (B = 20)), (3, (C != 30))}.

The variable processing part 132c defines the following mapping $\rho$ between the process row number CR and the variable (D = 40) of the leaf of the node number I:

$$\rho(4) = (D = 40)$$

That is, the variable processing part 132c adds (4, (D = 40)) to the mapping p.

The variable processing part 132c updates the node number I from 7 to 8.

The variable processing part 132c updates the process row number CR from 4 to 5.

The variable processing part 132c outputs the binary tree T, the matrix M of 4 × 3, the process row number CR, the node number I, and the mapping $\rho$. The flow returns to S33.

In S33, the process count determination part 133 determines that the node number I is larger than node count N (that is, I > N since I = 8 and N = 7). The flow proceeds to S36.

In S36, the processing result output part 134 outputs the matrix M of 4 × 3 and the mapping $\rho$. The mapping $\rho$ is {(1, (A != 10)), (1, (B = 20)), (3, (C != 30)), (4, (D = 40))}.

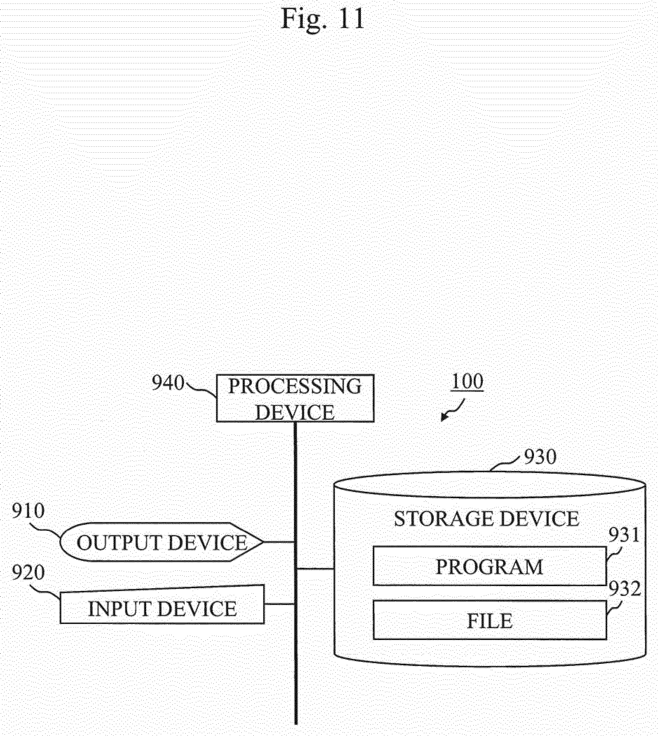

Fig. 11 is a diagram illustrating an example of a hardware configuration of the matrix generation apparatus 100 according to the embodiment of the present invention.

Referring to Fig. 11, the matrix generation apparatus 100 is a computer and provided with hardware such as an output device 910, an input device 920, a storage device 930, and a processing device 940. The hardware is utilized by the parts (what are described as "parts" in the description of the embodiment of the present invention) of the matrix generation apparatus 100.

The output device 910 is, for example, a display unit such as an LCD (Liquid Crystal Display), printer, or communication module (communication circuit or the like). The output device 910 is used by what are described as "parts" in the description of the embodiment of the present invention for outputting (transmitting) data, information, and a signal.

The input device 920 is, for example, a keyboard, mouse, touch panel, or communication module (communication circuit or the like). The input device 920 is used by what are described as "parts" in the description of the embodiment of the present invention for taking (receiving) data, information, and a signal, as input.

The storage device 930 is, for example, a ROM (Read Only Memory), RAM (Random Access Memory), HDD (Hard Disk Drive), or SSD (Solid State Drive). A program 931 and a file 932 are stored in the storage device 930. The program 931 includes a program that executes processes (functions) of what are described as "parts" in the description of the embodiment of the present invention. The file 932 includes data, information, a signal (value), and so on each of which is, for example, computed, processed, read, written, used, inputted, or outputted by what are described as "parts" in the description of the embodiment of the present invention.

The processing device 940 is, for example, a CPU (Central Processing Unit). The processing device 940 is connected to other hardware devices via a bus or the like and controls those hardware devices. The processing device 940 reads the program 931 from the storage device 930 and executes the program 931. The processing device 940 is used by what are described as "parts" in the description of the embodiment of the present invention to perform computation, processing, reading, writing, using, inputting, outputting, or the like.

With respect to what are described as "parts" in the description of the embodiment of the present invention, "part" may be replaced by "circuit", "device", or "appliance". With respect to what are described as "parts" in the description of the embodiment of the present invention, "part" may be replaced by "step", "procedure", or "process". That is, what are described as "parts" in the description of the embodiment of the present invention is implemented by software alone, hardware alone, or a combination of software and hardware. The software is stored in the storage device 930 as the program 931. The program 931 causes the computer to function as what are described as "parts" in the description of the embodiment of the present invention. Alternatively, the program 931 causes the computer to execute the processes of what are described as "parts" in the description of the embodiment of the present invention.

The embodiment of the present invention is described so far. The embodiment may be practiced partly. For example, out of what are described as "parts" in the description of the embodiment, only one may be adopted, or an arbitrary combination of some may be adopted. The present invention is not limited to this embodiment, but various changes can be made in the present invention as needed.

**Reference Signs List**

100: matrix generation apparatus; 110: tree structure generation part; 111: logical formula input part; 112: binary tree generation part; 113: binary tree output part; 120: root processing part; 121: root determination part; 122a: logical product processing part; 122b: logical sum processing part; 122c: variable processing part; 123: processing result output part; 130: node processing part; 131: node determination part; 132a: logical product processing part; 132b: logical sum processing part; 132c: variable processing part; 133: process count determination part; 134: processing result output part; 910: output device; 920: input device; 930: storage device; 931: program; 932: file; 940: processing device

**Claims**

1. A matrix generation apparatus (100) comprising:

   a tree structure generation part (110) adapted to receive as input a logical formula and generate tree structure data expressing the logical formula;
   a root processing part (120) adapted to determine a type of an element expressed by a root of the tree structure data generated by the tree structure generation part, among elements of the logical formula, and generate a matrix corresponding to the determined type, the determined type being one of a logical sum operator or a logical product operator; and
   a node processing part (130) adapted to store in a memory (930) the matrix generated by the root processing part, the node processing part adapted to sequentially select nodes, other than the root, of the tree structure data generated by the tree structure generation part, if having selected a node having a child node, then perform an operation corresponding to a type of an element expressed by the selected node, among the elements of the logical formula, on the matrix stored in the memory, if having selected a node not having a child node, then associate a variable being the element expressed by the selected node, among the elements of the logical formula, with one row of the matrix stored in the memory, and after having selected the nodes of the tree structure data, output the matrix stored in the memory and information indicating variables associated with respective rows of the matrix,

**characterized in that** the root processing part is adapted to, if the determined type is a logical sum operator, generate a 2-row, 1-column matrix in which every component is 1, as a matrix corresponding to the logical sum operator, or, if the determined type is a logical product operator, generate a 2-row, 2-column matrix in which a 1 st-row, 1 st-column component and a 2nd-row, 2nd-column component are each 1 or each 0, and a 1 st-row, 2nd-column component and a 2nd-row, 1st-column component are each 0 or each1, respectively, as a matrix corresponding to the logical product operator.

2. The matrix generation apparatus according to claim 1, wherein the node processing part is adapted to, if the type of the element expressed by the selected node is a logical sum operator, perform an operation of adding a new row and setting each component in a (CR + 1)th row to a same value as a corresponding component in a CRth row, as an operation corresponding to the logical sum operator, where the CRth row is a row with which a variable is to be associated next.

3. The matrix generation apparatus according to claim 1, wherein the node processing part is adapted to, if the type of the element expressed by the selected node is a logical product operator, perform an operation of adding a new row and a new column, and setting a CRth-row, CLth-column component and a (CR + 1)th-row, (CL + 1)th-column component each to 1 or each to 0, respectively, and a CRth-row, (CL + 1)th-column component and a (CR + 1)th-row, CLth-column component each to 0 or each to 1, respectively, as an operation corresponding to the logical product operator, where the CRth row is a row with which a variable is to be associated next, and the CLth column is a column having a smallest ordinal number among columns whose CRth-row components are each 1.

4. The matrix generation apparatus according to claim 1, wherein
with respect to a combination of rows for which an addition result of adding same-column components is 1 in every column, among the rows of the matrix outputted by the node processing part, if variables associated with respective rows are true, then the logical formula is true, and
with respect to a combination of rows for which an addition result of adding the same-column components is not 1 in at least one column, among the rows of the matrix outputted by the node processing part, even if variables associated with respective rows are true, the logical formula is false.

5. The matrix generation apparatus according to claim 1, wherein the node processing part is adapted to execute a process for each node of the tree structure data by recursive call.

6. The matrix generation apparatus according to 1, wherein the logical formula is a logical formula that defines a combination of pieces of information that are shared by a secret sharing scheme.

7. A matrix generation method comprising:

by the matrix generation apparatus (100) of claim 1, which is a computer, receiving as input a logical formula and generating tree structure data expressing the logical formula;
by the computer, determining a type of an element expressed by a root of the tree structure data, among elements of the logical formula; and
by the computer, storing in a memory (930) the generated matrix, sequentially selecting nodes, other than the root, of the tree structure data, if having selected a node having a child node, then performing an operation corresponding to a type of an element expressed by the selected node, among the elements of the logical formula, on the matrix stored in the memory, if having selected a node not having a child node, then associating a variable being the element expressed by the selected node, among the elements of the logical formula, with one row of the matrix stored in the memory, and after having selected the nodes of the tree structure data, outputting the matrix stored in the memory and information indicating variables associated with respective rows of the matrix.

8. A matrix generation program that causes a computer to execute:

a tree structure generation process of receiving as input a logical formula and generating tree structure data expressing the logical formula;

a root process of determining a type of an element expressed by a root of the tree structure data generated by the tree structure generation process, among elements of the logical formula, the determined type being one of a logical sum operator or a logical product operator and generating a matrix corresponding to the determined type; and

a node process of storing in a memory (930) the matrix generated by the root process, the node process sequentially selecting nodes, other than the root, of the tree structure data generated by the tree structure generation process, if having selected a node having a child node, then performing an operation corresponding to a type of an element expressed by the selected node, among the elements of the logical formula, on the matrix stored in the memory, if having selected a node not having a child node, then associating a variable being the element expressed by the selected node, among the elements of the logical formula, with one row of the matrix stored in the memory, and after having selected the nodes of the tree structure data, outputting the matrix stored in the memory and information indicating variables associated with respective rows of the matrix,

**characterized in that** the root process, if the determined type is a logical sum operator, generates a 2-row, 1-column matrix in which every component is 1, as a matrix corresponding to the logical sum operator, or if the determined type is a logical product operator, generates a 2-row, 2-column matrix in which a 1 st-row, 1st-column component and a 2nd-row, 2nd-column component are each 1 or each 0, and a 1st-row, 2nd-column component and a 2nd-row, 1st-column component are each 0 or each1, respectively, as a matrix corresponding to the logical product operator.

## Patentansprüche

1. Matrixerzeugungsvorrichtung (100), welche aufweist:

   einen Baumstruktur-Erzeugungsteil (110), der ausgebildet ist zum Empfangen einer logischen Formel als Eingabe und zum Erzeugen von Baumstrukturdaten, die die logische Formel ausdrücken;
   einen Wurzelverarbeitungsteil (120), der ausgebildet ist zum Bestimmen eines Typs eines Elements, das durch eine Wurzel der von dem Baumstruktur-Erzeugungsteil erzeugten Baumstrukturdaten ausgedrückt ist, aus Elementen der logischen Formel, und zum Erzeugen einer Matrix entsprechend dem bestimmten Typ, wobei der bestimmte Typ einer von einem logischen Summenoperator oder einem logischen Produktoperator ist; und
   einen Knotenverarbeitungsteil (130), der ausgebildet ist zum Speichern der durch den Wurzelverarbeitungsteil erzeugten Matrix in einem Speicher (930), wobei der Knotenverarbeitungsteil ausgebildet ist zum sequenziellen Auswählen von Knoten, die andere als die Wurzel sind, der durch den Baumstruktur-Erzeugungsteil erzeugten Baumstrukturdaten, wenn einen abgeleiteten Knoten ausgewählt habend, dann zum Durchführen einer Operation entsprechend einem Typ eines Elements, das durch den ausgewählten Knoten ausgedrückt wird, aus den Elementen der logischen Formel bei der in dem Speicher gespeicherten Matrix, wenn ein Knoten, der keinen abgeleiteten Knoten hat, ausgewählt wurde, dann zum Assoziieren einer Variablen, die ein Element ist, das durch den ausgewählten Knoten ausgedrückt wird, aus den Elementen der logischen Formel, mit einer Reihe der in dem Speicher gespeicherten Matrix, und nachdem die Knoten der Baumstrukturdaten ausgewählt wurden, zum Ausgeben der in dem Speicher gespeicherten Matrix und von Informationen, die mit jeweiligen Reihen der Matrix assoziierte Variablen anzeigen,
   **dadurch gekennzeichnet, dass** der Wurzelverarbeitungsteil ausgebildet ist zum, wenn der bestimmte Typ ein logischer Summenoperator ist, Erzeugen einer Matrix mit zwei Reihen und einer Spalte, in der jede Komponente 1 ist, als eine Matrix entsprechend dem logischen Summenoperator, oder, wenn der bestimmte Typ ein logischer Produktoperator ist, Erzeugen einer Matrix mit zwei Reihen, zwei Spalten, in der eine Komponente der ersten Reihe und ersten Spalte und eine Komponente der zweiten Reihe und zweiten Spalte jeweils 1 oder jeweils 0 sind, bzw. eine Komponente der ersten Reihe und zweiten Spalte und eine Komponente der zweiten Reihe und ersten Spalte jeweils 0 oder jeweils 1 sind, als eine Matrix entsprechend dem logischen Produktoperator.

2. Matrixerzeugungsvorrichtung nach Anspruch 1, bei der der Knotenverarbeitungsteil ausgebildet ist zum, wenn der Typ des durch den ausgewählten Knoten ausgedrückten Elements ein logischer Summenoperator ist, Durchführen einer Operation durch Hinzufügen einer neuen Reihe und Setzen jeder Komponente in eine (CR+1)-te Reihe auf einen gleichen Wert wie eine entsprechende Komponente in einer CR-ten Reihe, als eine Operation entsprechend dem logischen Summenoperator, wobei die CR-te Reihe eine Reihe ist, mit der eine Variable als Nächstes zu assoziieren ist.

3. Matrixerzeugungsvorrichtung nach Anspruch 1, bei der der Knotenverarbeitungsteil ausgebildet ist zum, wenn der Typ des durch den ausgewählten Knoten ausgedrückten Elements ein logischer Produktoperator ist, Durchführen einer Operation des Hinzufügens einer neuen Reihe und einer neuen Spalte, und Setzen einer Komponente der CR-ten Reihe und CL-ten Spalte bzw. einer Komponente der (CR+1)-ten Reihe, (CL+1)-ten Spalte jeweils auf 1 oder jeweils auf 0, und eine Komponente der CR-ten Reihe, (CL+1)-ten Spalte bzw. eine Komponente der (CR+1)-ten Reihe, CL-ten Spalte jeweils auf 0 oder jeweils 1, als eine Operation entsprechend dem logischen Produktoperator, wobei die CR-te Reihe eine Reihe ist, mit der eine Variable als Nächstes zu assoziieren ist, und die CL-te Spalte eine Spalte mit einer kleinsten Ordnungszahl aus Spalten, deren Komponenten der CR-ten Reihe jeweils 1 sind, ist.

4. Matrixerzeugungsvorrichtung nach Anspruch 1, bei der mit Bezug auf eine Kombination von Reihen, für die ein Additionsergebnis des Addierens von Komponenten derselben Spalte in jeder Spalte 1 ist, aus den Reihen der durch den Knotenverarbeitungsteil ausgegebenen Matrix, wenn mit jeweiligen Reihen assoziierte Variablen wahr sind, dann die logische Formel wahr ist, und
mit Bezug auf eine Kombination von Reihen, für die ein Additionsergebnis des Addierens der Komponenten derselben Spalte in zumindest einer Spalte nicht 1 ist, aus den Reihen der durch den Knotenverarbeitungsteil ausgegebenen Matrix, selbst wenn mit jeweiligen Reihen assoziierte Variablen wahr sind, die logische Formel falsch ist.

5. Matrixerzeugungsvorrichtung nach Anspruch 1, bei der der Knotenverarbeitungsteil ausgebildet ist zum Ausführen eines Prozesses für jeden Knoten der Baumstrukturdaten durch rekursives Unterprogramm.

6. Matrixerzeugungsvorrichtung nach Anspruch 1, bei der die logische Formel eine logische Formel ist, die eine Kombination von Informationsstücken, die durch ein geheimes Teilungsschema gemeinsam verwendet werden, definiert.

7. Matrixerzeugungsverfahren, welches aufweist:

durch eine Matrixerzeugungsvorrichtung (100) nach Anspruch 1, die ein Computer ist, Empfangen als Eingabe eine logische Formel und Erzeugen von Baumstrukturdaten, die die logische Formel ausdrücken;
durch den Computer, Bestimmen eines Typs eines Elements, das durch eine Wurzel der Baumstrukturdaten ausgedrückt wird, aus Elementen der logischen Formel; und
durch den Computer, Speichern der erzeugten Matrix in einem Speicher (930), sequenzielles Auswählen von Knoten, die andere als die Wurzel sind, der Baumstrukturdaten, wenn ein Knoten mit einem abgeleiteten Knoten ausgewählt wurde, dann Durchführen einer Operation entsprechend einem Typ eines Elements, das durch den ausgewählten Knoten ausgedrückt wird, aus den Elementen der logischen Formel, bei der in dem Speicher gespeicherten Matrix, wenn ein Knoten, der keinen abgeleiteten Knoten hat, ausgewählt wurde, dann Assoziieren einer Variablen, die das durch den ausgewählten Knoten ausgedrückte Element ist, aus den Elementen der logischen Formel, mit einer Reihe der in dem Speicher gespeicherten Matrix, und, nachdem die Knoten der Baumstrukturdaten ausgewählt wurden, Ausgeben der in dem Speicher gespeicherten Matrix und von Informationen, die mit jeweiligen Reihen der Matrix assoziierte Variablen anzeigen.

8. Matrixerzeugungsprogramm, das bewirkt, dass ein Computer ausführt:

einen Baumstruktur-Erzeugungsprozess des Empfangens einer logischen Formel als Eingabe und des Erzeugens von Baumstrukturdaten, die die logische Formel ausdrücken;
einen Wurzelprozess des Bestimmens eines Typs eines Elements, das durch eine Wurzel der durch den Baumstruktur-Erzeugungsprozess erzeugten Baumstruktur ausgedrückt wird, aus Elementen der logischen Formel, wobei der bestimmte Typ einer von einem logischen Summenoperator oder einem logischen Produktoperator ist, und des Erzeugens einer Matrix entsprechend dem bestimmten Typ; und
einen Knotenprozess des Speicherns der durch den Wurzelprozess erzeugten Matrix in einem Speicher (930), wobei der Knotenprozess sequenziell Knoten, die andere als die Wurzel sind, der durch den Baumstruktur-Erzeugungsprozess erzeugten Baumstrukturdaten auswählt, des, wenn ein Knoten, der einen abgeleiteten Knoten hat, ausgewählt wurde, Durchführens einer Operation entsprechend einem Typ eines durch den ausgewählten Knoten ausgedrückten Elements, aus den Elementen der logischen Formel, bei der in dem Speicher gespeicherten Matrix, des, wenn ein Knoten, der keinen abgeleiteten Knoten hat, ausgewählt wurde, Assoziierens einer Variablen, die ein durch den ausgewählten Knoten ausgedrücktes Element ist, aus den Elementen der logischen Formel, mit einer Reihe der in dem Speicher gespeicherten Matrix, und nachdem die Knoten der Baumstrukturdaten ausgewählt wurden, des Ausgebens der in dem Speicher gespeicherten Matrix und von Informationen, die mit jeweiligen Reihen der Matrix assoziierte Variablen anzeigen,
**dadurch gekennzeichnet, dass** der Wurzelprozess, wenn der bestimmte Typ ein logischer Summenoperator ist, eine Matrix mit zwei Reihen, einer Spalte erzeugt, in der jede Komponente 1 ist, als eine Matrix entsprechend dem logischen Summenoperator, oder wenn der bestimmte Typ ein logischer Produktoperator ist, eine Matrix mit zwei Reihen, zwei Spalten erzeugt, in der eine Komponente der ersten Reihe, ersten Spalte und eine Komponente der zweiten Reihe, zweiten Spalte jeweils 1 oder jeweils 0 sind, bzw. eine Komponente der ersten Reihe, zweiten Spalte und eine Komponente der zweiten Reihe, ersten Spalte jeweils 0 oder jeweils 1 sind, als eine Matrix entsprechend dem logischen Produktoperator.

**Revendications**

1.  Appareil de génération de matrice (100) comprenant :

    une partie de génération de structure arborescente (110) apte à recevoir, en tant qu'entrée, une formule logique, et à générer des données de structure arborescente exprimant la formule logique ;
    une partie de traitement de racine (120) apte à déterminer un type d'un élément exprimé par une racine des données de structure arborescente générées par la partie de génération de structure arborescente, parmi des éléments de la formule logique, et à générer une matrice correspondant au type déterminé, le type déterminé correspondant à l'un parmi un opérateur de somme logique ou un opérateur de produit logique ; et
    une partie de traitement de noeud (130) apte à stocker, dans une mémoire (930), la matrice générée par la partie de traitement de racine, la partie de traitement de noeud étant apte à sélectionner séquentiellement des noeuds, distincts du noeud racine, des données de structure arborescente générées par la partie de génération de structure arborescente, si est sélectionné un noeud présentant un noeud enfant, et à mettre en oeuvre ensuite une opération correspondant à un type d'un élément exprimé par le noeud sélectionné, parmi les éléments de la formule logique, sur la matrice stockée dans la mémoire, si est sélectionné un noeud ne présentant pas de noeud enfant, à associer ensuite une variable correspondant à l'élément exprimé par le noeud sélectionné, parmi les éléments de la formule logique, à une ligne de la matrice stockée dans la mémoire, et après avoir sélectionné les noeuds des données de structure arborescente, à fournir en sortie la matrice stockée dans la mémoire et des informations indiquant des variables associées à des lignes respectives de la matrice ; **caractérisé en ce que** la partie de traitement de racine est apte, si le type déterminé est un opérateur de somme logique, à générer une matrice à 2 lignes et 1 colonne dans laquelle chaque composante est « 1 », en tant qu'une matrice correspondant à l'opérateur de somme logique, ou, si le type déterminé est un opérateur de produit logique, à générer une matrice à 2 lignes et 2 colonnes dans laquelle une composante à 1 ligne et 1 colonne et une composante à 2 lignes et 2 colonnes sont chacune « 1 » ou chacune « 0 », et une composante à 1 ligne et 2 colonnes et une composante à 2 lignes et 1 colonne sont chacune « 0 » ou chacune « 1 », respectivement, en tant qu'une matrice correspondant à l'opérateur de produit logique.

2.  Appareil de génération de matrice selon la revendication 1, dans lequel la partie de traitement de noeud est apte, si le type de l'élément exprimé par le noeud sélectionné est un opérateur de somme logique, à mettre en oeuvre une opération consistant à ajouter une nouvelle ligne et à définir chaque composante dans une (CR + 1)ième ligne sur une même valeur qu'une composante correspondante dans une CRième ligne, en tant qu'une opération correspondant à l'opérateur de somme logique, où la CRième ligne est une ligne à laquelle une variable doit être associée subséquemment.

3.  Appareil de génération de matrice selon la revendication 1, dans lequel la partie de traitement de noeud est apte, si le type de l'élément exprimé par le noeud sélectionné est un opérateur de produit logique, à mettre en oeuvre une opération consistant à ajouter une nouvelle ligne et une nouvelle colonne, et à définir une composante de CRième ligne et CLième colonne et une composante de (CR + 1)ième ligne et (CL + 1)ième colonne, chacune sur « 1 », ou chacune sur « 0 », respectivement, et une composante de CRième ligne et (CL + 1)ième colonne et une composante de (CR + 1)ième ligne et CLième colonne, chacune sur « 0 » ou chacune sur « 1 », respectivement, en tant qu'une opération correspondant à l'opérateur de produit logique, où la CRième ligne est une ligne à laquelle une variable doit être associée subséquemment, et la CLième colonne est une colonne présentant un nombre ordinal minimal parmi des colonnes dont les composantes de CRième ligne sont chacune « 1 ».

4.  Appareil de génération de matrice selon la revendication 1, dans lequel, relativement à une combinaison de lignes pour laquelle un résultat d'addition dans le cadre de l'addition de composantes de même colonne est « 1 » dans chaque colonne, parmi les lignes de la matrice fournie en sortie par la partie de traitement de noeud, si des variables associées à des lignes respectives sont vraies, alors la formule logique est vraie ; et relativement à une combinaison de lignes pour laquelle un résultat d'addition dans le cadre de l'addition de composantes de même colonne n'est pas « 1 » dans au moins une colonne, parmi les lignes de la matrice fournie en sortie par la partie de traitement de noeud, même si des variables associées à des lignes respectives sont vraies, la formule logique est fausse.

5. Appareil de génération de matrice selon la revendication 1, dans lequel la partie de traitement de noeud est apte à exécuter un processus, pour chaque noeud des données de structure arborescente, par appel récursif.

6. Appareil de génération de matrice selon la revendication 1, dans lequel la formule logique est une formule logique qui définit une combinaison d'éléments d'information qui sont partagés par un schéma de partage secret.

7. Procédé de génération de matrice comprenant les étapes ci-dessous consistant à :

par le biais de l'appareil de génération de matrice (100) selon la revendication 1, lequel correspond à un ordinateur, recevoir, en tant qu'entrée, une formule logique, et générer des données de structure arborescente exprimant la formule logique ;
par le biais de l'ordinateur, déterminer un type d'un élément exprimé par une racine des données de structure arborescente, parmi des éléments de la formule logique ;
par le biais de l'ordinateur, stocker, dans une mémoire (930), la matrice générée, sélectionner séquentiellement des noeuds, distincts du noeud racine, des données de structure arborescente, si est sélectionné un noeud présentant un noeud enfant, et mettre en oeuvre ensuite une opération correspondant à un type d'un élément exprimé par le noeud sélectionné, parmi les éléments de la formule logique, sur la matrice stockée dans la mémoire, si est sélectionné un noeud ne présentant pas de noeud enfant, associer ensuite une variable correspondant à l'élément exprimé par le noeud sélectionné, parmi les éléments de la formule logique, à une ligne de la matrice stockée dans la mémoire, et après avoir sélectionné les noeuds des données de structure arborescente, fournir en sortie la matrice stockée dans la mémoire et des informations indiquant des variables associées à des lignes respectives de la matrice.

8. Programme de génération de matrice qui amène un ordinateur à exécuter :

un processus de génération de structure arborescente consistant à recevoir, en tant qu'entrée, une formule logique, et à générer des données de structure arborescente exprimant la formule logique ;
un processus de racine consistant à déterminer un type d'un élément exprimé par une racine des données de structure arborescente générées par le processus de génération de structure arborescente, parmi des éléments de la formule logique, le type déterminé correspondant à l'un parmi un opérateur de somme logique ou un opérateur de produit logique, et à générer une matrice correspondant au type déterminé ; et
un processus de noeud consistant à stocker, dans une mémoire (930), la matrice générée par le processus de racine, le processus de noeud sélectionnant séquentiellement des noeuds, distincts du noeud racine, des données de structure arborescente générées par le processus de génération de structure arborescente, si est sélectionné un noeud présentant un noeud enfant, et à mettre en oeuvre ensuite une opération correspondant à un type d'un élément exprimé par le noeud sélectionné, parmi les éléments de la formule logique, sur la matrice stockée dans la mémoire, si est sélectionné un noeud ne présentant pas de noeud enfant, à associer ensuite une variable correspondant à l'élément exprimé par le noeud sélectionné, parmi les éléments de la formule logique, à une ligne de la matrice stockée dans la mémoire, et après avoir sélectionné les noeuds des données de structure arborescente, à fournir en sortie la matrice stockée dans la mémoire et des informations indiquant des variables associées à des lignes respectives de la matrice ;
**caractérisé en ce que** le processus de racine, si le type déterminé est un opérateur de somme logique, génère une matrice à 2 lignes et 1 colonne dans laquelle chaque composante est « 1 », en tant qu'une matrice correspondant à l'opérateur de somme logique, ou, si le type déterminé est un opérateur de produit logique, génère une matrice à 2 lignes et 2 colonnes dans laquelle une composante à 1 ligne et 1 colonne et une composante à 2 lignes et 2 colonnes sont chacune « 1 » ou chacune « 0 », et une composante à 1 ligne et 2 colonnes et une composante à 2 lignes et 1 colonne sont chacune « 0 » ou chacune « 1 », respectivement, en tant qu'une matrice correspondant à l'opérateur de produit logique.

## Fig. 1

MAPPING ρ     MATRIX M

VARIABLE $\{p_1, \ldots, p_{n(=4)}\}$
$\begin{cases} (A! = 10) \leftarrow \\ (B = 20) \leftarrow \\ (C! = 30) \leftarrow \\ (D = 40) \leftarrow \end{cases}$
$\begin{bmatrix} M_{1.1} & M_{1.2} & M_{1.3} \\ M_{2.1} & M_{2.2} & M_{2.3} \\ M_{3.1} & M_{3.2} & M_{3.3} \\ M_{4.1} & M_{4.2} & M_{4.3} \end{bmatrix}$
$L(=4)$ ROWS

$r(=3)$ COLUMNS

## Fig. 2

LOGICAL FORMULA F

100

MATRIX GENERATION APPARATUS

110

TREE STRUCTURE GENERATION PART

BINARY TREE T NODE COUNT N

BINARY TREE T NODE COUNT N

120

ROOT PROCESS-ING PART

MATRIX M NODE NUMBER I MAPPING ρ

130

NODE PROCESS-ING PART

MATRIX M MAPPING ρ

## Fig. 3

## Fig. 4

# Fig. 5

## Fig. 6

120
ROOT PROCESSING PART

T, N

121
ROOT DETERMINA-TION PART

T, ρ →

122a
LOGICAL PRODUCT PROCESSING PART

122b
LOGICAL SUM PROCESSING PART

122c
VARIABLE PROCESSING PART

T, N

123
PROCESSING RESULT OUTPUT PART

← M, I, ρ

M, I, ρ

## Fig. 7

130
NODE PROCESSING PART

T, N, M, I, ρ

131
NODE DETERMINA-TION PART

T, M, CR, I, ρ →

132a
LOGICAL PRODUCT PROCESSING PART

132b
LOGICAL SUM PROCESSING PART

132c
VARIABLE PROCESSING PART

T, M, CR, I, ρ

133
PROCESS COUNT DETERMATION PART

T, M, CR, I, ρ

M, ρ

134
PROCESSING RESULT OUTPUT PART

M, ρ

# Fig. 8

```
                    ┌─────────────┐
                    │    START    │
                    └──────┬──────┘
                           │       S21
                    ┌──────▼──────┐
                    │ INPUT BINARY│
                    │    TREE     │
                    └──────┬──────┘
                           │       S22
                    ┌──────▼──────┐
                    │ INITIALIZE  │
                    │   MAPPING   │
                    └──────┬──────┘
                           │       S23
                    ◇ DETERMINE ROOT ◇
```

LOGICAL PRODUCT     LOGICAL SUM     VARIABLE

| S24a | S24b | S24c |
|------|------|------|
| LOGICAL PRODUCT (and) PROCESS | LOGICAL SUM (or) PROCESS | VARIABLE PROCESS |

| S25a | S25b | S25c |
|------|------|------|
| UPDATE NODE NUMBER | UPDATE NODE NUMBER | UPDATE MAPPING |

S26

```
                    ┌─────────────┐
                    │   OUTPUT    │
                    │ PROCESSING  │
                    │   RESULT    │
                    └──────┬──────┘
                           │
                    ┌──────▼──────┐
                    │     END     │
                    └─────────────┘
```

# Fig. 9

START

→ S31

INPUT
PARAMETER

→ S32

SET PROCESS
ROW NUMBER

→ S33

DETERMINE PROCESS COUNT

I > N

I ≤ N

→ S34

DETERMINE NODE

LOGICAL
PRODUCT

LOGICAL SUM

VARIABLE

S35a

LOGICAL
PRODUCT (and)
PROCESS

S35b

LOGICAL
SUM (or)
PROCESS

S35c

VARIABLE
PROCESS

→ S36

OUTPUT
PROCESSING
RESULT

END

# Fig. 10

# Fig. 11

940 — PROCESSING
DEVICE

100

930

910
OUTPUT DEVICE

920
INPUT DEVICE

STORAGE DEVICE

931
PROGRAM

932
FILE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011135895 A

- US 2013083921 A1

**Non-patent literature cited in the description**

- **A. LEWKO ; B. WATERS.** Decentralizing Attribute-Based Encryption. *Advances in Cryptology - EUROCRYPT 2011, Lecture Notes in Computer Science,* 2011, vol. 6632, 568-588

- **Z. CAO.** On Efficiently Transferring the Linear Secret-Sharing Scheme Matrix in Ciphertext-Policy Attribute-Based Encryption. *IACR Cryptology ePrint Archive,* 2010, vol. 374
- **G. VIPUL et al.** *Attribute-Based Encrpytion for Fine-Grained Access Control of Encrypted Data*